# EUROPEAN PATENT SPECIFICATION

(11) **EP 1 482 014 B1**
(45) Date of publication and mention of the grant of the patent: **05.01.2011**
(21) Application number: 04012600.5
(22) Date of filing: 27.05.2004
(51) Int. Cl.: C09D 5/36, B05D 7/00

(54) **Coating film formation process and coated article**
Verfahren zur Bildung eines Beschichtungsfilms und beschichteter Gegenstand
Procédé de formation d'un film de revêtement et article revêtu

(30) Priority: 30.05.2003 JP 2003153993
(43) Date of publication of application: 01.12.2004
(73) Proprietor: HONDA MOTOR CO., LTD., Tokyo 107-8556 (JP)
(72) Inventor: Ogawa, Takeshi, 1-4-1 Chuo, Wako-shi, Saitama-ken 351-01 (JP); Ihara, Satoru, 1-4-1 Chuo, Wako-shi, Saitama-ken 351-01 (JP); Miyazoe, Seigo, Shinagawa-ku, 4-chome, Tokyo 140-8675 (JP); Shiraga, Ryuichi, Shinagawa-ku, 4-chome, Tokyo 140-8675 (JP); Uchiyama, Toshihiko, 2-chome, Hirakata-shi, Osaka 573-1153 (JP); Inoue, Masanobu, 2-chome, Hirakata-shi, Osaka 573-1153 (JP)
(74) Representative: Henkel, Feiler & Hänzel

(56) References cited:
- WO-A-99/15597
- US-A- 5 104 922
- US-A- 5 968 655

## Description

### BACKGROUND OF THE INVENTION

### A. TECHNICAL FIELD

The present invention relates to: a coating film formation process which is useful for enhancing the design properties of automobile parts and parts for such as electric appliances; and a coated article having the excellent design properties as obtained by this process.

### B. BACKGROUND ART

As to the automobile parts and parts for such as electric appliances, a multilayered metallic coating film is formed on these parts (made of plastic materials or metal materials) for the purpose such as of providing them with a metal-tone aesthetic appearance to thus give them a high feeling. Examples of known processes for formation of the multilayered metallic coating film include a process in what is called a 3-coat-and-1-bake manner that: a solvent type base coat paint, a shining-material-containing aqueous metallic paint, and a clear paint are coated, and then the formed three layers of coating films are simultaneously processed by baking (e.g. refer to such as patent documents 1 and 2 below). This process is commonly adopted favorably in that it is enough that the heating step for curing the coating films is once carried out. However, this process has had problems such that: because the metallic paint is coated onto the uncured coating film surface, there is a possibility that the orientation of the shining material may become disordered to thus provide insufficient results with regard to the metal-tone aesthetic appearance or the invisibility of aluminum flakes.
[Patent Document ]
   JP-A-115094/2001 (Kokai)
[Patent Document 2]
   JP-A-141969/1986 (Kokai)

WO-A-99/15597 discloses a hardenable coating composition containing: (A1) one acrylate polymer based on 30 to 60 wt.% C₁-C₈-alkyl(meth)acrylate monomers,30 to 60 wt.% vinyl aromatic monomers and 0.5 to 10 wt.% (meth)acrylic acid; (A2) at least one non-associative acting concentrator which contains one acrylate copolymer based on (C₁-C₆)-alkyl(meth)acrylate and (meth)acrylic acid; (A3) at least one reactive group for a poly(meth)acrylate resin containing isocyanate, said resin differing from (A1); and (B) at least one cross-linking agent.

US-A-5 104 922 discloses a stable waterborne high solids metallic flake pigment dispersion containing an aqueous carrier, film forming binder and metallic flake pigment and having a solids content of about 40-90% by weight; wherein the film forming polymer is a phosphated acrylic polymer neutralized with ammonia or a primary, secondary or tertiary amine and contains metallic flake pigments in a pigment to binder weight ratio of about 30/100 - 1000/100 and is nonreactive with the binder and the dispersion has a pH of about 7-9.

US-A-5 968 655 discloses a process of multi-layer coating using a filler component comprising
a1) from 10 to 70 % by weight of an aqueous dispersion of a water-dilutable polyurethane resin or of a plurality of water-dilutable polyurethane resins, the content of polyurethane in the aqueous dispersion being from 10 to 60 % by weight, preferably from 20 to 50 % by weight,
a2) from 0 to 30 % by weight of one or more amino resins and/or of a blocked polyisocyanate,
a3) from 0 to 50 % by weight of one or more physically drying binders which are different from a1),
a4) from 5 to 40 % by weight of one or more fillers and/or extenders,
a5) from 0 to 30 % by weight of color pigments and/or effect pigments,
a6) from 0 to 5 % by weight of one or more rheological auxiliaries and/or paint auxiliaries, and
a7) from 0 to 10 % by weight of organic solvent.

The filler component is used to modify an aqueous basecoat composition, which is applied and followed by application of an aqueous basecoat second layer, a clear coat third layer, and then curing the coating layers together.

### SUMMARY OF THE INVENTION

### A. OBJECT OF THE INVENTION

Thus, an object of the present invention is to provide: a coating film formation process which enables the formation of a coating film excellent in the metal-tone aesthetic appearance and the invisibility of aluminum flakes; and a coated article having the excellent design properties as obtained by this process.

### B. DISCLOSURE OF THE INVENTION

The present inventors diligently studied to solve the above problems. As a result, the present inventors have completed the present invention by finding out that, in the process in which the solvent type base coat paint, the shining-material-containing aqueous base coat paint, and the top clear paint are coated in the 3-coat-and-1-bake manner, the aforementioned problems can be solved all at once by making an improvement such that: each of the step of coating the shining-material-containing aqueous base coat paint and the step of coating the top clear paint is carried out after the nonvolatile component content of each underlying coating film has come in each specific range; and further, as the shining-material-containing aqueous base coat paint, there is used a paint which has a nonvolatile component content and a Ti value in their respective specific ranges.

That is to say, a coating film formation process according to the present invention is a coating film formation process comprising the steps of: coating a solvent type base coat paint (B1) onto a substrate to thus form a coating film (b1) thereon; and then, after the nonvolatile component content of the coating film (b1) has reached not lower than 40 weight %, coating a shining-material-containing aqueous base coat paint (B2) onto the coating film (b1) to thus form a coating film (b2) thereon; and then, after the nonvolatile component content of the coating film (b2) has reached not lower than 70 weight %, coating a top clear paint onto the coating film (b2) to thus form a clear coating film thereon; and thereafter carrying out simultaneous baking of the formed three layers of coating films;
with the process being characterized in that, as the shining-material-containing aqueous base coat paint (B2), there is used a paint which contains a rheology control agent of 0.5 to 6.0 phr in nonvolatile component weight relative to the resin's solid components and has a paint's nonvolatile component content of 10 to 20 weight % and a thixotropic index value (Ti value) of not less than 3.0.

A coated article according to the present invention is a coated article having a coating film, wherein the coating film is formed by the aforementioned coating film formation process according to the present invention.

These and other objects and the advantages of the present invention will be more fully apparent from the following detailed disclosure.

### DETAILED DESCRIPTION OF THE INVENTION

Hereinafter, detailed descriptions are given about the present invention. However, the scope of the present invention is not bound to these descriptions. And other than the following illustrations can also be carried out in the form of appropriate modifications of the following illustrations within the scope not departing from the spirit of the present invention.

The coating film formation process according to the present invention is a coating film formation process in what is called a 3-coat-and-1-bake manner comprising the steps of: coating a solvent type base coat paint (B1) onto a substrate to thus form a coating film (b1) (as a first coating film layer) thereon; and then coating a shining-material-containing aqueous base coat paint (B2) onto the coating film (b1) to thus form a coating film (b2) (as a second coating film layer) thereon; and then coating a top clear paint onto the coating film (b2) to thus form a clear coating film (as a third coating film layer) thereon; and thereafter carrying out simultaneous baking of the formed three layers of coating films. Accordingly, the coating film obtained by the coating film formation process according to the present invention has a multilayered structure such that the first coating film layer and the second coating film layer (which contains the shining material) are interposed between the substrate and the third coating film layer.

The solvent type base coat paint (B1) for forming the first coating film layer in the coating film formation process according to the present invention is not especially limited. Solvent type base paints which are conventionally used are usable as such. However, favorable examples thereof include at least one member selected from among 1-package polyurethane paints, 2-package polyurethane paints, and melamine resin curing paints. In addition, the solvent type base coat paint (B1) may contain the below-mentioned shining material (which is contained in the aqueous base coat paint (B2)) in the range of 1 to 40 weight % relative to the paint's solid components. In addition, if necessary, the solvent type base coat paint (B1) may contain such as: color pigments (e.g. organic pigments, such as azo lake pigments, insoluble azo pigments, condensed azo pigments, phthalocyanine pigments, indigo pigments, perynone pigments, perylene pigments, phthalonic pigments, dioxazine pigments, quinacridone pigments, isoindolinone pigments, and metal-complex pigments; and inorganic pigments, such as yellow iron oxide, red iron oxide, carbon black, and titanium dioxide); and extenders (e.g. talc, calcium carbonate, precipitated barium sulfate, and silica); within the range not spoiling the effects of the present invention.

Although not especially limited, the film thickness of the coating film (b1) formed from the aforementioned solvent type base coat paint (B1) is favorably set in the range of 7 to 13 µm. In the case where the film thickness of the coating film (b1) is less than 7 µm, there is a possibility that the hiding power may be insufficient. On the other hand, in the case where the film thickness of the coating film (b1) is more than 13 µm, there is a possibility that, when the aqueous base coat paint (B2) is coated, the orientational defect of the shining material in the coating film (b2) may tend to occur to thus result in failure to sufficiently obtain the metal-tone aesthetic appearance, and further that popping may occur.

In the coating film formation process according to the present invention, it is important that, after the nonvolatile component content of the coating film (b1) formed from the solvent type base coat paint (B1) has reached not lower than 40 weight % (favorably, not lower than 60 weight %), the shining-material-containing aqueous base coat paint (B2) is coated onto the coating film (b1). Thereby, a coating film excellent in the metal-tone aesthetic appearance and the invisibility of aluminum flakes can be formed. In the case where the shining-material-containing aqueous base coat paint (B2) is coated while the nonvolatile component content of the coating film (b1) is lower than 40 weight %, then the interface between the solvent type base coat paint (B1) and the shining-material-containing aqueous base coat paint (B2) is non-uniform, so that: the cratering occurs or the metal-tone aesthetic appearance or the invisibility of aluminum flakes is spoiled. Incidentally, such as adjustment of the vaporization speed of a diluting thinner will do for the nonvolatile component content of the coating film (b1) to come in the aforementioned range.

In the coating film formation process according to the present invention, it is important that the shining-material-containing aqueous base coat paint (B2) for forming the second coating film layer contains a rheology control agent of 0.5 to 6.0 phr in nonvolatile component weight relative to the resin's solid components of this paint (B2). Thereby, a coating film excellent in the metal-tone aesthetic appearance and the invisibility of aluminum flakes can be formed. Favorable examples of the aforementioned rheology control agent include at least one member selected from among polyether urethane resins (examples of commercially available ones include "ADEKANOL (Registered Trademark) UH-752", "ADEKANOL (Registered Trademark) UH-750", "ADEKANOL (Registered Trademark) UH-462", and "ADEKANOL (Registered Trademark) UH-814N", produced by ASAHI DENKA CO., LTD.), polyamide compounds (examples of commercially available ones include "DISPARLON (Registered Trademark) AQ-600" produced by KUSUMOTO CHEMICALS, LTD.), and polycarboxylic acid resins (examples of commercially available ones include: "PRIMAL (Registered Trademark) ASE-60" produced by ROHM and HAAS JAPAN K. K.; and "VISCALEX (Registered Trademark) HV-30" produced by CLARIANT (JAPAN) K. K.). It is the polyether urethane resins that are favorable particularly of these. In the case where the amount of the rheology control agent in the aqueous base coat paint (B2) is smaller than the aforementioned range, it follows that the Ti value is so low as to fail to sufficiently provide the metal-tone aesthetic appearance and the invisibility of aluminum flakes. On the other hand, in the case where the amount of the rheology control agent in the aqueous base coat paint (B2) is larger than the aforementioned range, it follows that problems are brought about in that the coating operation is difficult, and further in that the storage stability is deteriorated. More favorable modes are as follows: when the rheology control agent is the polyether urethane resin, its content is in the range of 0.5 to 6.0 phr in nonvolatile component weight relative to the resin's solid components of the paint (B2); when the rheology control agent is the polyamide compound, its content is in the range of 2.0 to 6.0 phr in nonvolatile component weight relative to the resin's solid components of the paint (B2); and when the rheology control agent is the polycarboxylic acid resin, its content is in the range of 2.0 to 6.0 phr in nonvolatile component weight relative to the resin's solid components of the paint (B2).

It is important that the aforementioned shining-material-containing aqueous base coat paint (B2) has a paint's nonvolatile component content (during the coating) of 10 to 20 weight % (favorably, 10 to 18 weight %) and a Ti value (thixotropic index) value) (during the coating) of not less than 3.0. Thereby, a coating film excellent in the metal-tone aesthetic appearance and the invisibility of aluminum flakes can be formed. In the case where the paint's nonvolatile component content of the shining-material-containing aqueous base coat paint (B2) is lower than 10 weight %, the sagging tends to occur. On the other hand, in the case where the paint's nonvolatile component content of the shining-material-containing aqueous base coat paint (B2) is higher than 20 weight %, there appears a tendency toward a paint state ranging from a semi-gelled state to a gelled state, so that the coating operation is so difficult as to result in inferior smoothness of the resultant coating film or in failure to sufficiently provide the metal-tone aesthetic appearance. In the case where the Ti value of the shining-material-containing aqueous base coat paint (B2) is less than 3.0, the metal mottling or the sagging tends to occur to thus result in failure to sufficiently obtain the metal-tone aesthetic appearance and the invisibility of aluminum flakes. Incidentally, in the case where the Ti value of the shining-material-containing aqueous base coat paint (B2) is too large, there is a possibility that the coating operation may be difficult. Therefore, this Ti value is favorably not larger than 10.0. Incidentally, in the present invention, the aforementioned Ti value will do if it is measured by the method as below-mentioned in the description of Examples of some preferred embodiments.

It is favorable that the aforementioned shining-material-containing aqueous base coat paint (B2) contains a binder resin (B21) and a crosslinking agent (B22).

There is no especial limitation on the aforementioned binder resin (B21). Resins which are conventionally used for aqueous base coat paints are usable as such. However, hydroxyl-group-containing resins or hydroxyl-group-and-carboxyl-group-containing resins are favorable. Examples thereof include hydroxyl-group-containing or hydroxyl-group-and-carboxyl-group-containing acrylic resins or polyester resins. Particularly, the hydroxyl-group-containing acrylic resins are favorable.

There is no especial limitation on the aforementioned crosslinking agent (B22). Crosslinking agents which are conventionally used for aqueous base coat paints are usable as such. Examples thereof include melamine resins, polyisocyanate compounds, and polycarbodiimide compounds. Particularly of these, the melamine resins and the polycarbodiimide compounds are favorable for the aforementioned shining-material-containing aqueous base coat paint (B2).

Examples of the aforementioned melamine resins include alkoxymethylol melamines, specifically, such as methoxymethylol melamine, n-butoxymethylol melamine, isobutoxymethylol melamine, methoxybutoxymethylol melamine, and their condensation products. More favorable ones are the methoxymethylol melamine or n-butoxymethylol melamine having an average condensation degree of 1 to 4. However, melamine resins having at least one triazine ring would be free of especial limitation.

As to the aforementioned polycarbodiimide compounds, compounds having at least two carbodiimide groups (-N=C=N-) per molecule would do. Specific examples thereof include poly(4,4-diphenylmethanecarbodiimide), poly(3,3-dimethyl-4,4-biphenylmethanecarbodiimide), poly(tolylcarbodiimide), poly(p-phenylenecarbodiimide), poly(m-phenylenecarbodiimide), poly(3,3-dimethyl-4,4-diphenylmethanecarbodiimide), poly(naphthylenecarbodiimide), poly(1,6-hexamethylenecarbodiimide), poly(4,4-methylenebiscyclohexylcarbodiimide), poly(1,4-tetramethylenecarbodiimide), poly(1,3-cyclohexylenecarbodiimide), poly(1,4-cyclohexylenecarbodiimide), poly(1,3-diisopropylphenylenecarbodiimide), poly(1-methyl-3,5-diisopropylphenylenecarbodiimide), poly(1,3,5-triethylphenylenecarbodiimide), and poly(triisopropylphenylenecarbodiimide).

A melamine resin (B221) or a mixture (B222) of the melamine resin and the polycarbodiimide compound of (melamine resin)/(polycarbodiimide compound) = 100/0 to 15/85 in nonvolatile component weight ratio is more favorable as the aforementioned crosslinking agent (B22). In the case where the ratio of the polycarbodiimide compound in the mixture (B222) of the melamine resin and the polycarbodiimide compound is more than the aforementioned range, there is a possibility that the gas resistance may be deteriorated. Therefore, the mixing ratio between the melamine resin and the polycarbodiimide compound is desirably set in the aforementioned range.

The aforementioned aqueous base coat paint (B2) contains a shining material. The aforementioned shining material is free of especial limitation, and hitherto publicly known shining materials are usable. For example, there can be used at least one member selected from the group consisting of aluminum flake pigments, metal-oxide-coated alumina flake pigments, metal-oxide-coated silica flake pigments, interfering mica pigments, colored mica pigments, metal titanium flake pigments, stainless flake pigments, metal-plated glass flake pigments, metal-oxide-coated glass flake pigments, hologram pigments, and flaky pigments which include cholesteric liquid crystal polymers. Incidentally, the content of the shining material in the aforementioned aqueous base coat paint (B2) is favorably in the range of 1 to 40 weight % relative to the paint's solid components. In addition, similarly to the aforementioned solvent type base coat paint (B1), if necessary, the aqueous base coat paint (B2) may contain such as the aforementioned color pigments and the aforementioned extenders within the range not spoiling the effects of the present invention.

Although not especially limited, the film thickness of the coating film (b2) formed from the aforementioned aqueous base coat paint (B2) is favorably set in the range of 1 to 6 µm. In the case where the film thickness of the coating film (b2) is less than 1 µm, there is a possibility that the hiding power may be so insufficient as to result in inferior design properties. On the other hand, in the case where the film thickness of the coating film (b2) is more than 6 µm, there is a possibility that the orientational defect of the shining material in the aqueous base coat paint (B2) may tend to occur to thus result in failure to sufficiently obtain the metal-tone aesthetic appearance.

In the coating film formation process according to the present invention, it is important that, after the nonvolatile component content of the coating film (b2) formed from the shining-material-containing aqueous base coat paint (B2) has reached not lower than 70 weight %, the top clear paint is coated onto the coating film (b2). In the case where the top clear paint is coated while the nonvolatile component content of the coating film (b2) is lower than 70 weight %, then it follows that the top clear paint is repelled by water remaining in the coating film (b2) and it is therefore difficult to form the clear coating film. Incidentally, such as adjustment of the setting time, or air blowing, or preheating (usually, at 80 °C for about 5 to about 10 minutes), will do for the nonvolatile component content of the coating film (b2) to come in the aforementioned range.

The top clear paint for forming the third coating film layer in the coating film formation process according to the present invention is not especially limited. Top clear paints which are conventionally used are usable as such. However, favorable examples thereof include at least one member selected from among 1-package polyurethane paints, 2-package polyurethane paints, melamine resin curing paints, and acid-epoxy curing paints (e.g. a solvent type clear paint such as described in JP-B-019315/1996 (Kokoku), which includes a carboxyl-group-containing polymer and an epoxy-group-containing polymer; examples of commercially available ones include "MACFLOW (Registered Trademark)-O-330 CLEAR" produced by NIPPON PAINT CO., LTD.). Incidentally, the top clear paint may be any of solvent type paints, aqueous paints, and powder paints, so there is no limitation on its paint form.

Although not especially limited, the film thickness of the clear coating film formed from the aforementioned top clear paint is favorably set in the range of 10 to 60 µm, more favorably 20 to 50 µm. In the case where the film thickness of the clear coating film is less than 10 µm, there is a possibility that there may occur problems of such as inferior coating film appearance and durability deterioration. On the other hand, in the case where the film thickness of the clear coating film is more than 60 µm, there is a possibility that the sagging may tend to occur to thus cause inconveniences of the coating operation.

Incidentally, each of the aforementioned solvent type base coat paint (B1), the aforementioned shining-material-containing aqueous base coat paint (B2), and the aforementioned top clear paint may contain other components (e.g.: crosslinking agents other than the aforementioned ones; surface conditioners; rheology control agents other than the aforementioned ones; ultraviolet absorbing agents; photo stabilizing agents; antioxidants; curing catalysts) which are conventionally added as additives for paints besides the aforementioned components, if necessary.

In the coating film formation process according to the present invention, the simultaneous baking of the three layers of coating films (coating film (b1), coating film (b2), and clear coating film) formed in the above ways is carried out. The heating temperature or heating duration in the baking is not especially limited. However, for example, in the case where the 1-package polyurethane paint or 2-package polyurethane paint is used as the clear paint, it is enough that the heating is carried out at 60 to 120 °C for 10 to 30 minutes. In the case where the melamine resin curing paint or acid-epoxy curing paint is used as the clear paint, it is enough that the heating is carried out at 120 to 160 °C for 10 to 30 minutes.

The substrate to which the coating film formation process according to the present invention is applicable is not especially limited. Examples thereof include: metal substrates such as iron, aluminum, copper, and stainless steel; and plastic substrates such as polyolefins, ABS, polycarbonates, and polyurethanes. In addition, on surfaces of these substrates for the coating films to be formed on, there may beforehand be formed such as a primer layer and an intermediate coating film layer, for example, by coating such as a primer, a cationic electrocoating paint, and an intermediate coat paint.

In the coating film formation process according to the present invention, the method for coating each paint is not especially limited. It is enough to carry out the coating appropriately selected from among hitherto publicly known coating methods (e.g. spray, roll coater, brush coating, electrostatic coating) with consideration given to such as the form of the paint being used and the surface shape of the substrate.

The coated article according to the present invention is a coated article having a coating film, wherein the coating film is formed by the aforementioned coating film formation process according to the present invention. Accordingly, the coated article according to the present invention is provided with the excellent metal-tone aesthetic appearance and the excellent invisibility of aluminum flakes and has the good design properties.

### (Effects and Advantages of the Invention):

The present invention can provide: a coating film formation process which enables the formation of a coating film excellent in the metal-tone aesthetic appearance and the invisibility of aluminum flakes; and a coated article having the excellent design properties as obtained by this process.

### DETAILED DESCRIPTION OF THE PREFERRED EMBODIMENTS

Hereinafter, the present invention is more specifically illustrated by the following Examples of some preferred embodiments. However, the present invention is not limited to these in any way.

Incidentally, the nonvolatile component content and Ti value of the shining-material-containing aqueous base coat paint (B2) were determined in the following ways.

(Nonvolatile component content): In accordance with JIS-K-5601-1-2, there was measured a nonvolatile component content given when the paint was heated at 105 °C for 3 hours.

(Ti value): The viscosities of the paint were measured at 20 °C, numbers of revolutions = 6 rpm and 60 rpm with a Brookfield-viscometer ("RC-100" produced by TOKI SANGYO CO., LTD.) to calculate a value of (viscosity value measured at number of revolutions = 6 rpm)/(viscosity value measured at number of revolutions = 60 rpm).

### (Examples 1 to 9 and Comparative Examples 1 to 5):

Coating films were formed by coating, in the 3-coat-and-1-bake manner, each paint (B1) as shown in Tables 1 to 3, each paint (B2) as prepared in the following way, and each clear paint as shown in Tables 1 to 3. Specifically, each coating film (b1) was formed by spraywise coating each solvent type base coat paint (B1) onto each substrate, as shown in Tables 1 to 3, so as to have a dried film thickness of 10 µm. Then, each coating film (b1) was left intact at 20 °C for 1 minute (when the nonvolatile component content of each coating film (b1) (NV of b1) was each value as shown in Tables 1 to 3 (NV of b1 when each paint (B2) was coated) as a result of the adjustment of the vaporization speed by setting the thinner composition of each paint (B1) at each composition as shown in Tables 1 to 3 (composition as beforehand set so that the nonvolatile component content of the coating film would be each value as shown in Tables 1 to 3 (NV of b1 when each paint (B2) was coated) when the coating film was left intact at 20 °C for 1 minute after the paint had been spraywise coated so that the dried film thickness would be 10 µm)). Immediately thereafter, each coating film (b2) was formed by spraywise coating each shining-material-containing aqueous base coat paint (B2) onto each coating film (b1) so as to have a dried film thickness of 4 µm and then preheated at 80 °C for a duration in the range of 5 to 10 minutes so that the nonvolatile component content of each coating film (b2) (NV of b2) would be each value as shown in Tables 1 to 3 (NV of b2 when each top clear paint was coated). Thereafter, each clear coating film was formed by spraywise coating each top clear paint onto each coating film (b2) so as to have a dried film thickness of 35 µm. Then, each substrate, on which the three layers of coating films had been formed, was heated at 80 °C for 20 minutes in the case of having used the below-mentioned 2K as the top clear paint and at 140 °C for 20 minutes in the case of having used the below-mentioned MF as the top clear paint, thus carrying out the simultaneous baking of the three layers of coating films.

Incidentally, each preheating condition (heating duration) for the nonvolatile component content of each coating film (b2) (NV of b2) to reach each value as shown in Tables 1 to 3 was determined in the following way. That is to say, a plurality of test pieces are prepared by spraywise coating each paint (B2) (being used) onto aluminum foil (its weight is represented by "x") so as to have a dried film thickness of 4 µm, and then the test pieces are preheated at 80 °C for their respective heating durations (minutes) as varied in the range of 5 to 10 minutes. Immediately thereafter, the aluminum foil is folded lest the volatile components should escape, and then the weights of the test pieces are measured (these measured weights are represented by "a"). Next, the folded aluminum foil is spread and then heated at 105 °C for 3 hours in accordance with JIS-K-5601-1-2. Thereafter, the weights of the test pieces are measured (these measured weights are represented by "b"). Then, as to each test piece, the nonvolatile component content was calculated in accordance with the expression "[(b - x)/(a - x)] × 100". The relations of the plurality of heating durations with the resultant nonvolatile component contents were plotted to draw a calibration curve, from which there was determined each heating duration for the nonvolatile component content to reach each desired value as shown in Tables 1 to 3 (NV of b2 when each top clear paint was coated).

The details of the paints (B1), clear paints, and substrates as shown in Tables 1 to 3, and the methods for preparing the paints (B2) as shown in Tables 1 to 3, are as follows.

### Solvent type base coat paints (B1):

1K (1-package polyurethane paints): prepared by diluting a solvent type 1-package polyurethane base paint of blocked isocyanate-acrylic resin ("R301 Base" produced by NIPPON BEE CHEMICAL CO., LTD.) with thinners (the compositional ratios (weight ratios) of ethyl acetate ester (EA)/3-ethoxy-3-ethylpropionate (EEP) are as shown in Tables 1 to 3) so that the viscosity would be 12 seconds/25 °C•#4 Ford cup.

2K (2-package polyurethane paints): prepared by diluting a solvent type 2-package polyurethane base paint of polyisocyanate-acrylic resin ("R212 Base" produced by NIPPON BEE CHEMICAL CO., LTD.) with thinners (the compositional ratios (weight ratios) of ethyl acetate ester (EA)/3-ethoxy-3-ethylpropionate (EEP) are as shown in Tables 1 to 3) so that the viscosity would be 12 seconds/25 °C•#4 Ford cup.

MF (melamine resin curing paints): prepared by diluting a solvent type base paint of melamine-acrylic resin ("SUPERLAC (Registered Trademark) M-95" produced by NIPPON PAINT CO., LTD.) with thinners (the compositional ratios (weight ratios) of an aromatic hydrocarbon solvent ("SOLVESO (Registered Trademark)-100" produced by EXXON CORPORATION (S100))/ethyl acetate ester (EA) are as shown in Tables 1 to 3) so that the viscosity would be 10 seconds/25 °C•NK-2 cup.

### Shining-material-containing aqueous base coat paints (B2):

Paints (B2) used in Examples 1 to 7 and Comparative Examples 1 to 5: prepared by: placing an aqueous base paint of melamine-acrylic resin ("AQUAREX (Registered Trademark) AR2100" produced by NIPPON PAINT CO., LTD.: including at least a hydroxyl-group-and-carboxyl-group-containing binder resin, a crosslinking agent, and a shining material) (having beforehand been diluted to a solid component content of 30 weight % with deionized water) into a container having a stirrer; and then adding thereto rheology control agents (as shown in Tables 1 to 3) and deionized water under stirring to thereby obtain undiluted liquids of the paints; and then diluting, with deionized water, these undiluted liquids of the paints to the paint's nonvolatile component contents of the paints (B2) as shown in Tables 1 to 3.

Paint (B2) used in Example 8: prepared by: placing an aqueous base paint of melamine-carbodiimideacrylic resin ("KX-0076" produced by NIPPON BEE CHEMICAL CO., LTD.: including at least a hydroxyl-group-and-carboxyl-group-containing binder resin, a crosslinking agent, and a shining material) (having beforehand been diluted to a solid component content of 25 weight % with deionized water) into a container having a stirrer; and then adding thereto a rheology control agent (as shown in Table 3) and deionized water under stirring to thereby obtain a undiluted liquid of the paint; and then diluting, with deionized water, this undiluted liquid of the paint to the paint's nonvolatile component content of the paint (B2) as shown in Table 3.

Paint (B2) used in Example 9: prepared by: placing an aqueous base paint of melamine-acrylic resin (the aforementioned "AQUAREX (Registered Trademark) AR2100") (having beforehand been diluted to a solid component content of 30 weight % with deionized water) into a container having a stirrer; and then adding thereto a crosslinking agent under stirring; and then further adding a rheology control agent (as shown in Table 3) and deionized water under stirring to thereby obtain a undiluted liquid of the paint; and then diluting, with deionized water, this undiluted liquid of the paint to the paint's nonvolatile component content of the paint (B2) as shown in Table 3.

Shown in Tables 1 to 3 are: the mixing ratios of the components used for the preparation of the paints (B2); the types (MF/CDIm weight ratios) of the crosslinking agents contained in the paints (B2); the types of the shining materials contained in the paints (B2); the rheology control agent contents of the paints (B2) (nonvolatile component contents (phr) of the rheology control agents relative to the resin's solid components of the paints (B2)); the paint's nonvolatile component contents of the paints (B2); and the Ti values of the paints (B2).

Incidentally, in Tables 1 to 3, there are used the following abbreviations.

Aqueous base paint AR2100: an aqueous base paint of melamine-acrylic resin (the aforementioned "AQUAREX (Registered Trademark) AR2100") (having beforehand been diluted to a solid component content of 30 weight % with deionized water)

Aqueous base paint KX-0076: an aqueous base paint of melamine-carbodiimideacrylic resin (the aforementioned "KX-0076") (having beforehand been diluted to a solid component content of 25 weight % with deionized water)

Rheology control agent UH-752: a polyether urethane resin ("ADEKANOL (Registered Trademark) UH-752" produced by ASAHI DENKA CO., LTD., solid component content = 30 weight %)

Rheology control agent ASE-60: a polycarboxylic acid resin ("PRIMAL (Registered Trademark) ASE-60" produced by ROHM and HAAS JAPAN K. K., solid component content = 28 weight %)

Crosslinking agent (CDIm): a polycarbodiimide compound ("ISS-1000" produced by NIPPON PAINT CO., LTD., solid component content = 70.7 weight %, carbodiimide equivalent = 905)

Crosslinking agent (MF): a melamine resin

Shining material 1: an aluminum paste ("MH-8801" produced by ASAHI KASEI CORPORATION, particle diameter = 16 µm)

Shining material 2: an aluminum paste ("91-0562" produced by TOYO ALUMINUM K. K., particle diameter = 18 µm)

### Top clear paints:

2K (2-package polyurethane paint): prepared by diluting 100 weight parts of a solvent type 2-package polyurethane paint of polyisocyanate-acrylic resin ("R290S CLEAR" produced by NIPPON BEE CHEMICAL CO., LTD.) with 17 weight parts of a thinner (methyl ethyl ketone/petroleum hydrocarbon solvent ("LAWS (Registered Trademark)" produced by SHELL JAPAN K. K.) = 50/50 weight ratio).

MF (melamine resin curing paint): prepared by diluting a solvent type clear paint of melamine-acrylic resin ("SUPERLAC (Registered Trademark) O-100" produced by NIPPON PAINT CO., LTD.) with an aromatic hydrocarbon solvent ("SOLVESO (Registered Trademark)-100" produced by EXXON CORPORATION) so that the viscosity would be 26 seconds/25 °C•NK-2 cup.

### Substrates:

M: prepared by: electrocoating a cationic electrocoating paint ("POWER TOP (Registered Trademark) V-50" produced by NIPPON PAINT CO., LTD.) onto a zinc-phosphated dull steel sheet so that the dried film thickness would be 25 µm; and then baking the resultant coating film at 160 °C for 30 minutes; and then, further thereonto, air-spray-coating an intermediate coat paint ("ORGA (Registered Trademark) P-5 Sealer" produced by NIPPON PAINT CO., LTD.) so that the dried film thickness would be 40 µm; and then baking the resultant coating film at 140 °C for 30 minutes.

P1: prepared by: washing a polypropylene substrate with isopropanol; and then drying it; and then, thereonto, spray-coating a chlorinated polypropylene solvent type primer ("RB116 PRIMER" produced by NIPPON BEE CHEMICAL CO., LTD.) so that the dried film thickness would be 8 µm; and then drying the resultant coating film at 80 °C for 10 minutes.

P2: prepared by: washing an ABS substrate with isopropanol; and then drying it; and then, thereonto, spray-coating a urethane lacquer solvent type primer ("R185-1 PRIMER" produced by NIPPON BEE CHEMICAL CO., LTD.) so that the dried film thickness would be 8 µm; and then drying the resultant coating film at 80 °C for 15 minutes.

The evaluations about the coating films formed in the above Examples and Comparative Examples, and the evaluations of the diluted states of the paints (B2) before coating, were carried out in the following ways. The results are shown in Tables 1 to 3.

### <Metal-tone aesthetic appearance (IV value)>:

The IV values of the formed coating films were measured with an IV meter ("ALCOPE (Registered Trademark) LMR-200" produced by KANSAI PAINT CO., LTD.). In the case where the resultant IV value was less than 400, this measured IV value was taken as the IV value of the formed coating film.

On the other hand, as to the coating film having an IV value of not less than 400 as measured with the above IV meter, it is difficult to measure the IV value directly with the above IV meter. Therefore, the IV value was determined from a calibration curve as drawn on the basis of values as measured with a digital angle-varying glossmeter. Specifically, a plurality of test pieces for drawing the calibration curve were prepared (these test pieces had the same hue as the color of the paint as used for the formed coating film, but had a plurality of different IV values). These were measured by the IV values with the above IV meter, and further their gloss values at an incident angle of 45 degrees and a light-receiving angle of 35 degrees were determined with the digital angle-varying glossmeter ("UGV-5D" produced by SUGA TEST INSTRUMENTS CO., LTD.), from which a graph of the gloss values versus the IV values was produced to draw the calibration curve. Next, similarly to the aforementioned test pieces, the gloss value of the formed coating film was measured at the same incident angle and light-receiving angle with the digital angle-varying glossmeter, and then the IV value which was determined from the resultant gloss value in accordance with the calibration curve was taken as the IV value of the formed coating film.

### <Invisibility of aluminum flakes>:

The state of the existence of aluminum flakes in the surface of the formed coating film was observed with the eye to make a judgment on the following standards.
   ○: The aluminum flakes in the coating film exist in a uniformly dispersed state and are therefore invisible, so the coating film is finished with a metal tone.
   × : The aluminum flakes in the coating film exist in the form of particles and are therefore mush visible, so the coating film is not finished with a metal tone.

### <Appearance>:

The appearance of the formed coating film was observed with the eye to make a judgment on the following standards.
○: No abnormality of the appearance, such as metal mottling, luster mottling, or cratering, is seen.
X: An abnormality of the appearance, such as metal mottling, luster mottling, or cratering, is seen.

### <Diluted state of paint (B2) before coating>:

The diluted state of the paint (B2), when it got coated, was observed with the eye to make a judgment on the following standards.
○: No abnormality, such as gelation, is seen.
Δ: Being in a semi-gelled state.
X: Being in an entirely gelled state.

**Table 1**

| | | | Example 1 | | Example 2 | | Example 3 | | Example 4 | |
|---|---|---|---|---|---|---|---|---|---|---|
| Paint (B1) | | | 1K | | 1K | | MF | | 1K | |
| | | Composition of thinner (weight ratio) | EA/EEP-80/20 | | EA/EEP=80/20 | | S100/EA=60/40 | | EA/EEP=80/10 | |
| Point (B2) | Mixing ratio/weight parts | | Solution | Solid component content | Solution | Solid component content | Solution | Solid component content | Solution | Solid component content |
| | | Aqueous base paint AR2100 | 423.4 | 127.03 | 423.4 | 127.03 | 423.4 | 127.03 | 423.4 | 127.03 |
| | | Aqueous base paint KX-0076 | - | - | - | - | - | - | - | - |
| | | Rheology control agent UH752 | 6.70 | 2.00 | 8.40 | 2.52 | 8.40 | 2.52 | 21.70 | 6.50 |
| | | Rheology control agent ASE-60 | - | - | - | - | - | - | - | - |
| | | Crosslinking agent (CDIm) | - | - | - | - | - | - | - | - |
| | | Deionized water | 231.2 | - | 280.9 | - | 280.9 | - | 444.9 | - |
| | | Total | 661.3 | 129.03 | 712.7 | 129.65 | 712.7 | 129.55 | 890.0 | 133.53 |
| | | Nonvolatile component content (weight %) of undiluted liquid of paint | 19.3 | | 18.2 | | | | 15.0 | |
| | Type of crosslinking agent MF/CDlm ratio (weight ratio) | | MF | | MF | | MF | | MF | |
| | | | 100/0 | | 100/0 | | 100/0 | | 100/0 | |
| | Type of shining material | | Shining material 1 | | Shining material 1 | | Shining material 1 | | Shining material 2 | |
| | Rheology control agent content (phr) | | 1.6 | | 2.0 | | 2.0 | | 5.1 | |
| | Paint's nonvolatile component content (weight %) | | 16 | | 16 | | 16 | | 11.5 | |
| | Ti value | | 6.5 | | 8 | | 8 | | 6.5 | |
| Top clear paint | | | 2K | | 2K | | MF | | 2K | |
| Substrate | | | M | | P1 | | M | | P2 | |
| NV (weight %) of b1 when paint (82) was coated | | | 60 | | 60 | | 60 | | 60 | |
| NV (weight %) of b2 when top clear paint was coated | | | 70 | | 70 | | 70 | | 70 | |
| Metal-tone aesthetic appearance (IV value) | | | 400 | | 430 | | 430 | | 500 | |
| Invisibility of aluminum flakes | | | ○ | | ○ | | ○ | | ○ | |
| Appearance | | | ○ | | ○ | | ○ | | ○ | |
| Diluted state of paint (B2) before coating | | | ○ | | ○ | | ○ | | ○ | |

**Table 2**

| | | | Comparative Example I | | Comparative Example 2 | | Example 5 | | Example 6 | | Example 7 | |
|---|---|---|---|---|---|---|---|---|---|---|---|---|
| Paint (B1) | | | 1K | | 1K. | | 2K | | 2K | | MF | |
| | | Composition of thinner (weight ratio) | EA/EEP=80/10 | | EA/EEP=80/20 | | EA/EEP=80/20 | | EA/EEP=60/40 | | S100/EA=0/100 | |
| Paint (B2) | Mixing ratio/weight parts | | Solution | Solid component content | Solution | Solid component content | Solution | Solid component content | Solution | Solid component content | Solution | Solid component content |
| | | Aqueous base paint AR2100 | 423.4 | 127.03 | 423.4 | 127.03 | 423.4 | 127.03 | 423.4 | 127.03 | 421.4 | 127.03 |
| | | Aqueous base paint KX-0076 | - | - | - | - | - | - | - | - | - | - |
| | | Rheology control agent UH752 | - | - | 26.70 | 8.00 | - | - | 8.40 | 2.52 | 8.40 | 2.52 |
| | | Rheology control agent ASE-60 | - | - | - | - | 10.70 | 3.00 | - | - | - | - |
| | | Crosslinking agent (CDIm) | 0 | - | - | - | - | - | - | - | - | - |
| | | Deionized water | 0 | - | 446.4 | - | 280.4 | - | 280.9 | - | 290.9 | - |
| | | Total | 423.4 | 127.03 | 896.5 | 135.03 | 714.5 | 130.03 | 712.7 | 129.55 | 712.7 | 129.55 |
| | | Nonvolatile component content (weight %) of undiluted liquid of paint | 30.0 | | 15.1 | | 18.2 | | 18.2 | | 18.2 | |
| | Type of crosslinking agent | | MF | | MF | | MF | | MF | | MF | |
| | MF/CDIm ratio (weight ratio) | | 100/0 | | 100/0 | | 100/0 | | 100/0 | | 100/0 | |
| | Type of shining material | | Shining material 1 | | Shining material 1 | | Shining material 1 | | Shining material 1 | | Shining material 1 | |
| | Rheology control agent content (phr) | | 0.0 | | 6.3 | | 2.4 | | 2.0 | | 2.0 | |
| | Paint's nonvolatile component content (weight %) | | 30 | | 9 | | 16 | | 16 | | 16 | |
| | Ti value | | 2.5 | | 6.2 | | 3.5 | | 8 | | 8 | |
| Top clear paint | | | 2K | | 2K | | 2K | | 2K | | MF | |
| Substrate | | | P1 | | P1 | | P2 | | P1 | | M | |
| NV (weight %) of b1 when paint (B2) was coated | | | 60 | | 60 | | 60 | | 45 | | 90 | |
| NV (weight %) of b2 when top clear paint was coated | | | 70 | | 70 | | 70 | | 70 | | 70 | |
| Metal-tone aesthetic appearance (IV value) | | | 140 | | 500 | | 400 | | 400 | | 430 | |
| Invisibility of aluminum flakes | | | × | | ○ | | ○ | | ○ | | ○ | |
| Appearance | | | ○ | | ○ | | ○ | | ○ | | ○ | |
| Diluted state of paint (B2) before coating | | | ○ | | Δ | | ○ | | ○ | | ○ | |

**Table 3**

| | | | Comparative Example 3 | | Comparative Example 4 | | Comparative Example 5 | | Example 8 | | Example 9 | |
|---|---|---|---|---|---|---|---|---|---|---|---|---|
| Paint (B1) | | | 1K | | 1K | | 1K | | 1K | | MF | |
| | | Composition of thinner (weight ratio) | EA/EEP=50/50 | | EA/EEP=80/20 | | - | | EA/EEP=80/20 | | S 100/EA=80/20 | |
| Paint (B2) | Mixing ratio/weight parts | | Solution | Solid component content | Solution | Solid component content | Solution | Solid component content | Solution | Solid component content | Solution | Solid component content |
| | | Aqueous base paint AR2100 | 423.4 | 127.03 | 423.4 | 127.03 | 423.4 | 127.03 | - | - | 421.8 | 126.54 |
| | | Aqueous base paint KX-0076 | - | - | - | - | - | - | 500.2 | 125.04 | - | - |
| | | Rheology control agent UH752 | 8.40 | 2.52 | 8.40 | 2.52 | 8.40 | 2.52 | 8.40 | 2.52 | 8.40 | 2.52 |
| | | Rheology control agent ASE-60 | - | - | - | - | - | - | - | - | - | - |
| | | Crosslinking agent (CDIm) | - | - | - | - | - | - | - | - | 2.1 | 1.47 |
| | | Deionized water | 280.9 | - | 280.9 | - | 83.8 | - | 81.7 | - | 138.1 | - |
| | | Total | 712.7 | 129.35 | 712.7 | 129.55 | 317.6 | 129.55 | 570.3 | 127.56 | 570.4 | 130.53 |
| | | Nonvolatile component content (weight %) of undiluted liquid of paint | 18.2 | | 18.2 | | 25.0 | | 22.4 | | 22.6 | |
| | Type of crosslinking agent MF/CDIm ratio (weight ratio) | | MF | | MF | | MF | | MF+CDIm | | MF+CDIm | |
| | | | 100/0 | | 100/0 | | 100/0 | | 31/69 | | 95/5 | |
| | Type of shining material | | Shining material 1 | | Shining material 1 | | Shining material 1 | | Shining material 1 | | Shining material 1 | |
| | Rheology control agent content (phr) | | 2.0 | | 2.0 | | 2.0 | | 2.0 | | 2.0 | |
| | Paint's nonvolatile component content (weight %) | | 16 | | 16 | | 25 | | 16 | | 16 | |
| | Ti value | | 8 | | 8 | | Unmeasured | | 7 | | 7 | |
| Top clear paint | | | 2K | | 2K | | - | | 2K | | MF | |
| Substrate | | | P1 | | P1 | | P1 | | P1 | | M | |
| NV (weight %) of b1 when paint (B2) was coated | | | 35 | | 60 | | - | | 60 | | 60 | |
| NV (weight %) of b2 when top clear paint was coated | | | 70 | | 80 | | Not coatable | | 70 | | 70 | |
| Metal-tone aesthetic appearance (IV value) | | | 300 | | Immeasurable | | Unevaluated | | 400 | | 400 | |
| Invisibility of aluminum flakes | | | × | | Immeasurable | | Unevaluated | | ○ | | ○ | |
| Appearance | | | ○ | | × | | Unevaluated | | ○ | | ○ | |
| Diluted state of paint (B2) before coating | | | ○ | | ○ | | × | | ○ | | ○ | |

## Claims

1. A coating film formation process, which is a coating film formation process comprising the steps of: coating a solvent type base coat paint (B1) onto a substrate to thus form a coating film (b1) thereon; and then, after the nonvolatile component content of the coating film (b1) has reached not lower than 40 weight %, coating a shining-material-containing aqueous base coat paint (B2) onto the coating film (b1) to thus form a coating film (b2) thereon; and then, after the nonvolatile component content of the coating film (b2) has reached not lower than 70 weight%, coating a top clear paint onto the coating film (b2) to thus form a clear coating film thereon; and thereafter carrying out simultaneous baking of the formed three layers of coating films;
with the process being **characterized in that**, as the shining-material-containing aqueous base coat paint (B2), there is used a paint which contains a rheology control agent of 0.5 to 6.0 phr in nonvolatile component weight relative to the resin's solid components and has a paint's nonvolatile component content of 10 to 20 weight% and a thixotropic index value of not less than 3.0.

2. A coating film formation process according to claim 1, wherein the shining-material-containing aqueous base coat paint (B2) contains a binder resin (B21) and a crosslinking agent (B22), wherein the binder resin (B21) includes a hydroxyl-group-containing resin or hydroxyl-group-and-carboxyl-group-containing resin, and wherein the crosslinking agent (B22) includes a melamine resin (B221) or a mixture (B222) of the melamine resin and a polycarbodiimide compound of (melamine resin)/(polycarbodiimide compound) = 100/0 to 15/85 in nonvolatile component weight ratio.

3. A coating film formation process according to claim 1 or 2, wherein the solvent type base coat paint (B1) is at least one member selected from among 1-package polyurethane paints, 2-package polyurethane paints, and melamine resin curing paints.

4. A coated article, which is a coated article having a coated film, wherein the coating film is formed by the coating film formation process as recited in any one of claims 1 to 3.

## Patentansprüche

1. Verfahren zur Bildung eines Beschichtungsfilms, das die folgenden Stufen umfasst:
Auftragen eines Grundstrich-Anstrichmittels des Lösemitteltyps (B1) auf ein Substrat, um auf diesem dadurch einen Beschichtungsfilm (b1) zu bilden; und, nachdem der Gehalt des Beschichtungsfilms (b1) an der nichtflüchtigen Komponente nicht weniger als 40 Gew.-% erreicht hat, nachfolgendes Auftragen eines wässerigen, ein glänzendes Material enthaltenden Grundstrich-Anstrichmittels (B2) auf den Beschichtungsfilm (b1), um auf diesem dadurch einen Beschichtungsfilm (b2) zu bilden; und, nachdem der Gehalt des Beschichtungsfilms (b2) an der nichtflüchtigen Komponente nicht weniger als 70 Gew.-% erreicht hat, nachfolgendes Auftragen eines farblosen Abschlussstrich-Anstrichmittels auf den Beschichtungsfilm (b2), um auf diesem dadurch einen farblosen Beschichtungsfilm zu bilden; und nachfolgendes Durchführen eines gleichzeitigen Brennens der gebildeten drei Schichten von Beschichtungsfilmen;
wobei das Verfahren **dadurch gekennzeichnet ist, dass** als das wässerige, ein glänzendes Material enthaltende Grundschicht-Anstrichmittel (B2) ein Anstrichmittel verwendet wird, das ein Rheologiesteuerungsmittel zu 0,5 bis 6,0 phr als Gewicht der nichtflüchtigen Komponente, bezogen auf die festen Komponenten des Harzes, enthält und einen Gehalt des Anstrichmittels an nichtflüchtigen Komponenten von 10 bis 20 Gew.-% und einen Wert des Thixotropieindex' von nicht weniger als 3,0 aufweist.

2. Verfahren zur Bildung eines Beschichtungsfilms nach Anspruch 1, wobei das wässerige, ein glänzendes Material enthaltende Grundschicht-Anstrichmittel (B2) ein Harzbindemittel (B21) und ein Vernetzungsmittel (B22) enthält, wobei das Harzbindemittel (B21) ein Hydroxylgruppen enthaltendes Harz oder ein Hydroxylgruppen und Carboxylgruppen enthaltendes Harz umfasst und wobei das Vernetzungsmittel (B22) ein Melaminharz (B221) oder ein Gemisch (B222) von dem Melaminharz und einer Polycarbodiimidverbindung in einem Gewichtsverhältnis der nichtflüchtigen Komponenten von (Melaminharz) /(Polycarbodiimidverbindung) = 100/0 bis 15/85 umfasst.

3. Verfahren zur Bildung eines Beschichtungsfilms nach Anspruch 1 oder 2, wobei das Grundstrich-Anstrichmittel des Lösemitteltyps (B1) mindestens ein Anstrichmittel ist, das aus Einkomponenten-Polyurethan-Anstrichmitteln, Zweikomponenten-Polyurethan-Anstrichmitteln und härtbaren Melaminharz-Anstrichmitteln ausgewählt ist.

4. Beschichteter Gegenstand, der ein beschichteter Gegenstand mit einem Beschichtungsfilm ist, wobei der Beschichtungsfilm durch das Verfahren zur Bildung eines Beschichtungsfilms nach den Angaben in einem der Ansprüche 1 bis 3 gebildet ist.

## Revendications

1. Procédé de formation d'un film de revêtement, qui est un procédé de formation de film de revêtement comprenant les étapes consistant : à appliquer une peinture de revêtement de base de type solvant (B1) sur un substrat pour former ainsi un film de revêtement (b1) sur celui-ci ; puis, lorsque la teneur en constituant non volatil du film de revêtement (b1) atteint pas moins de 40% en poids, à appliquer une peinture de revêtement de base aqueuse contenant un matériau brillant (B2) sur le film de revêtement (b1) pour former ainsi un film de revêtement (b2) sur celui-ci ; puis, lorsque la teneur en constituant non volatil du film de revêtement (b2) atteint pas moins de 70% en poids, à appliquer une peinture transparente du dessus sur le film de revêtement (b2) pour former ainsi un film de revêtement transparent sur celui-ci ; puis à effectuer une cuisson simultanée des trois couches de films de revêtement formées ;
le procédé étant **caractérisé en ce que**, en tant que peinture de revêtement aqueuse contenant un matériau brillant (B2), l'on utilise une peinture qui contient un agent contrôlant la rhéologie de 0,5 à 6,0 phr en poids de constituant non volatil par rapport aux constituants solides de la résine et a une teneur en constituant non volatil d'une peinture de 10 à 20 % en poids et une valeur d'indice thixotropique non inférieure à 3,0.

2. Procédé de formation d'un film de revêtement selon la revendication 1, dans lequel la peinture de revêtement de base aqueuse contenant un matériau brillant (B2) contient une résine liante (B21) et un agent de réticulation (B22), dans lequel la résine liante (B21) inclut une résine contenant un groupe hydroxyle ou une résine contenant un groupe hydroxyle et un groupe carboxyle, et dans lequel l'agent de réticulation (B22) inclut une résine mélamine (B221) ou un mélange (B222) de la résine mélamine et d'un composé polycarbodiimide de (résine mélamine)/(composé polycarbodiimide) = 100/0 à 15/85 en rapport en poids des constituants non volatils.

3. Procédé de formation d'un film de revêtement selon la revendication 1 ou la revendication 2, dans lequel la peinture de revêtement de base de type solvant (B1) est au moins un élément choisi parmi les peintures polyuréthanes à 1 conditionnement, les peintures polyuréthanes à 2 conditionnements, et les peintures durcissant par résine mélamine.

4. Article revêtu, qui est un article revêtu ayant un film appliqué, dans lequel le film de revêtement est formé par le procédé de formation de film de revêtement tel que décrit selon l'une quelconque des revendications 1 à 3.
